(19) Europäisches Patentamt
European Patent Office
Office européen des brevets

(11) EP 4 557 278 A1

(12) EUROPEAN PATENT APPLICATION

(43) Date of publication:
**21.05.2025 Bulletin 2025/21**

(21) Application number: **25153625.6**

(22) Date of filing: **15.07.2024**

(51) International Patent Classification (IPC):
***G10L 15/26** (2006.01)*

(52) Cooperative Patent Classification (CPC):
**G10L 15/26; G06V 10/82; G06V 30/10; G06V 30/304;** G06F 40/169

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 IT 202300014784**

(62) Document number(s) of the earlier application(s) in accordance with Art. 76 EPC:
**24188673.8**

(71) Applicants:
- **Università degli Studi di Torino**
  **10124 Torino (IT)**
- **Maize S.r.l.**
  **31056 Roncade (TV) (IT)**

(72) Inventors:
- **ARMANO, Tiziana**
  **10124 Torino (IT)**
- **MAIETTA, Davide**
  **10124 Torino (IT)**
- **BERNAREGGI, Cristian**
  **10124 Torino (IT)**
- **SOFIA, Adriano**
  **10124 Torino (IT)**
- **CORIASCO, Sandro**
  **10124 Torino (IT)**
- **DI TOMASO, Vittorio**
  **31056 Roncade (TV) (IT)**
- **GUADALUPI, Maria Francesca**
  **31056 Roncade (TV) (IT)**
- **DE FRANCESCO, Nazareno**
  **31056 Roncade (TV) (IT)**
- **CAPIETTO, Anna**
  **10124 Torino (IT)**
- **MAZZEI, Alessandro**
  **10124 Torino (IT)**
- **DUCCI, Mattia**
  **10124 Torino (IT)**
- **BARATTO, Gabriele**
  **10124 Torino (IT)**
- **MANOLINO, Carola**
  **10124 Torino (IT)**
- **TARASCONI, Francesco**
  **31056 Roncade (TV) (IT)**
- **CRESPAN, Roberta**
  **31056 Roncade (TV) (IT)**
- **GABRIELLI, Maria Luisa**
  **31056 Roncade (TV) (IT)**

(74) Representative: **Mola, Edoardo**
**Praxi Intellectual Property S.p.A.**
**Corso Vittorio Emanuele II, 3**
**10125 Torino (IT)**

Remarks:
This application was filed on 23.01.2025 as a divisional application to the application mentioned under INID code 62.

(54) **METHOD FOR AIDING THE PRODUCTION OF AN ELECTRONIC DOCUMENT**

(57) A method (100) of assisting in the production of an electronic document, preferably a transcription comprising an encoding of graphic symbols manually produced during a lesson having technical content, comprising the steps of receiving (110) an audio file comprising at least one reference to a mathematical formula, a chemical formula or a musical figure with a staff; receiving (120) an image file comprising at least one textual part and/or at least one formula or a musical figure generated manually during the lesson; generating (130) a transcription comprising a plurality of timestamps (12) associated with portions of text (11) of said transcription so as to identify a time interval in which said portion of text is spoken in the audio file; processing (140) the transcription so as to provide an estimated position of at least one text string (13) referring to the formula or musical figure within the transcription; extracting (150) at least a portion of the image file representing an area comprising a formula or a musical figure by means of a third trained boxing algorithm; generating (160) an encoding of graphic symbols of a formula or a musical figure; providing (170) via a user interface an editor on which to display in a first area of the interface (10) the transcription in such a way that one of the portions of text (11) comprising one of the text strings (13) is highlighted; displaying in a second area of the interface (20) different from the first an audio player

EP 4 557 278 A1

configured to play the said audio file synchronized with the timestamps of the transcription; displaying in a third area of the interface (30), the said encoding and/or graphic symbols of the said encoding; displaying in a fourth area of the interface (40), different from the first, second and third, the said image file.

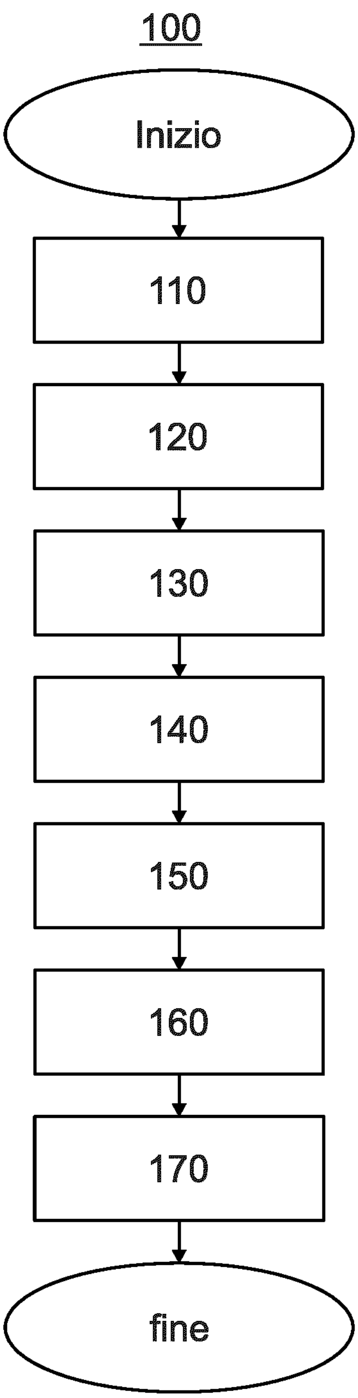


Fig. 1

## Description

### TECHNICAL FIELD OF THE INVENTION

The present invention relates to a method for aiding in the production of an electronic document. More specifically, the present invention refers to a method for aiding in the production of an electronic document accessible to people with disabilities and/or specific learning disorders.

### STATE OF THE ART

During the approximately two years of remote teaching due to the pandemic, the most utilized and widespread educational resources in e-learning systems were those like video lessons. Subsequently, almost all Italian universities continued to deliver some courses entirely online for the 2021/2022 academic year, while for other courses, the traditional in-person teaching channel was also used.

It is clear that lesson recordings have become a fundamental learning tool. However, the accessibility of video lessons, particularly those in scientific fields, presents certain challenges when the users are individuals with disabilities or specific learning disorders (SLDs). For example, people with hearing impairments require adequate subtitles, while those with visual and/or motor disabilities, as well as people with SLDs, need a transcript.

To ensure accessibility and full usability of such resources, transcriptions and subtitles must be created appropriately.

Although there are many known systems for automatic transcription and subtitling that can produce results with a certain level of accuracy, an unresolved issue arises from the presence of references to specific graphic notations within an audio or audiovisual recording.

By "graphic notation," we mean, for example, a mathematical or chemical formula within a predominantly scientific lesson, a specific melody drawn on a pentagram in a recording from a music school or conservatory, or an image created using a particular drawing technique in a recording from an art school.

Transcriptions into natural language of these graphic notations by known tools are not sufficiently effective, often producing results that are ambiguous and verbose. An example of the ease with which ambiguity can arise during natural language transcription, even for a simple formula, is "a over b plus one," which could correspond to either the formula $\frac{a}{b}+1$ or the formula $\frac{a}{b+1}$. An example of verbosity due to natural language transcription is evident in the simple formula $at^n \in A[t] \forall a \in A, n \in \mathbb{N}$, which becomes: "A times T to the power of n must belong to A of t for every a belonging to A and n belonging to N."

### OBJECTIVES AND SUMMARY OF THE INVENTION

The objective of the present invention is to resolve at least in part the aforementioned disadvantages by proposing a method for aiding in the production of an electronic document, such as a transcript that includes manually created graphic symbols during a lesson with technical content. The method includes the following steps:

- Receiving an audio file that includes at least one reference to a mathematical formula, a chemical formula, or a musical figure with a pentagram;
- Receiving an image file that includes at least some text and/or at least one mathematical formula, chemical formula, or musical figure created manually during the lesson;
- Generating, through a first natural language processing algorithm applied to the audio file, a transcription that includes a plurality of timestamps associated with portions of the text in the transcription, in order to identify a time interval in which that portion of text is spoken in the audio file;
- Processing the transcription using a second machine learning algorithm trained to recognize a text string within a portion of the text that refers to a mathematical formula, chemical formula, or musical figure, so as to provide an estimated position of at least one text string referring to the mathematical formula, chemical formula, or musical figure within the transcription. This estimated position is determined by a pair of references that mark the beginning and end of said string;
- Extracting at least one portion of the image file representing an area that contains a mathematical formula, chemical formula, or musical figure using a trained boxing algorithm;
- Generating a graphic symbol encoding of a mathematical formula, chemical formula, or musical figure using a fourth machine learning algorithm, which is configured to receive as input at least one portion of the image file;
- Providing, through a user interface, an editor that allows the following:
- Displaying the transcription in a first area of the interface, where one of the text portions that includes one of the text strings is highlighted based on the corresponding pair of references;
- Displaying an audio player in a second area of the interface, different from the first, that is configured to play the audio file synchronized with the timestamps of the transcription;
- Displaying in a third area of the interface, the said encoding and/or graphic symbols of the encoding;

- Displaying the image file in a fourth area of the interface, different from the first, second, and third areas.

The method according to the present invention provides support for the creation of an electronic document, such as a transcript of a lesson with technical content, where it is important to be able to integrate, depending on the context of the lesson, mathematical formulas, chemical formulas, and musical figures. This helps to avoid incorrect interpretations due to the transcription of such elements in natural language.

The method of the present invention enables a user to be in the best possible position when creating an electronic document as previously described.

In fact, within a single view represented by the user interface, all the elements necessary for a person to correctly interpret the parts of the lesson with high technical content are visible. The user can easily verify, integrate, and modify parts of the transcription. Additionally, they can supplement, modify, or replace the formulas or musical figures generated in natural language with the corresponding mathematical formulas, chemical formulas, or musical figures manually created during the lesson.

According to a preferred embodiment, the audio file is extracted from a video lesson. In a preferred embodiment, the editor used in the user interface is a LaTeX editor. Preferably, the user interface includes an area where it is possible to compose a mathematical formula, a chemical formula, or a musical figure that can be integrated into the text in LaTeX format.

By "musical figure," we refer to the notation of notes on a pentagram, which can include sound figures (notes) and silence figures (rests). Preferably, the composition area includes a variety of mathematical formulas, chemical formulas, or musical figures to speed up and simplify the composition process, reducing typing errors.

## BRIEF DESCRIPTION OF THE DRAWINGS

The invention is described below based on non-limiting examples illustrated in the following figures, which refer respectively to:

- Fig. 1: A block diagram of the steps of the method of the present invention;
- Fig. 2: A first view of an embodiment of the user interface;
- Fig. 3: A detailed view of the embodiment shown in Fig. 1;
- Fig. 4: A second view of an embodiment of the user interface;
- Fig. 5: A third view of an embodiment of the user interface.

## DETAILED DESCRIPTION OF THE INVENTION

Fig. 1 shows, through a flow diagram, a preferred embodiment of a method for aiding in the production of an electronic document, preferably a transcript that includes graphic symbols manually created during a lesson with technical content.

For lessons with technical content, according to the interpretation given by this invention, these are lessons where the orally presented concepts (e.g., by a teacher) are supplemented by additional material prepared manually during the lesson to enhance understanding. Examples of these materials include writing a mathematical formula, a chemical formula, or a musical figure, such as one or more notes written on a pentagram. The fields of study involved are broad, encompassing scientific areas such as chemistry, physics, engineering, medicine, as well as humanities, such as lessons given within a conservatory course.

An electronic document refers to, for example, a transcript that includes graphic symbols, such as the transcription of a recording from an audio file, where any graphic symbols like mathematical formulas, chemical formulas, or musical figures are also integrated.

The advantage of integrating graphic symbols within the transcription is to increase accessibility to all the content manually created during the course of a lesson, such as handwritten notes on a blackboard, a tablet, or even just on a piece of paper.

This type of content would be lost in a traditional transcription of only the audio, which would increase interpretation ambiguities, as highlighted in prior art. During the pandemic, the demand for accessible educational platforms surged, but accessibility to these platforms alone is not sufficient if all the content produced during a lesson is not also accessible. Technical content, especially scientific content, is currently not accessible in audio or video recordings of lessons. The method of the present invention aims to make this content accessible, thereby increasing the overall accessibility of the lessons.

The method 100 shown in Fig. 1 starts with the initial steps 110 and 120, which involve acquiring an audio file that contains at least one reference to a mathematical formula, chemical formula, or musical figure, and a file containing material manually generated during a recorded lesson. The input audio file could be originally an audio file, such as from a voice recorder, or it could be extracted from the audio track of a video recording. The second input file, which contains the material generated during the lesson, includes at least one mathematical formula, chemical formula, or musical figure depending on the context of the recorded lesson.

For instance, in a math lesson where a specific formula is explained and the instructor writes it on a blackboard or tablet to aid understanding for both in-person attendees and remote viewers. Similarly, during a music lesson, the instructor explains the meaning of symbols used to write a specific melody, graphically representing it by writing notes, rests, and silences on a pentagram step by step, perhaps on a blackboard. This file may also include descriptive text such as the name of a theorem, symphony, or chemical compound being represented by the formula or musical figure.

These input files are digital, and while the audio file is naturally digital, the formulas or figures may be manually written on a blackboard or paper. In this case, if the medium used doesn't allow for digital saving of the created content, it needs to be converted into a digital format, for example, by capturing the images with a smartphone and saving the collected series of images into a file.

A third step 130 involves generating a transcription from the audio file. Specifically, a natural language processing algorithm can be used, chosen from a range of available transcription tools like Google Cloud speech-to-text, NTE, etc. These algorithms were evaluated based on the accuracy and fidelity of the transcription generated from the audio file using a dataset of audio/-video recordings and comparing the generated transcriptions with manually accurate transcriptions. The evaluation was based on qualitative and quantitative metrics, which took into account factors such as the quality of the input audio and the number and types of errors present in the transcription.

Examples of these metrics include the Character Error Rate and the Word Error Rate, which indicate the percentage of characters and words correctly recognized by the algorithm. According to the aims of this invention, evaluation conducted on a balanced set of lecture segments from various subjects revealed that most errors are concentrated in the more technical parts of a lesson. Natural language processing algorithms produce a transcription, where the text is divided into portions based on the silences and pauses in the audio file. For each portion of the transcription, they provide corresponding timestamps. As will be explained later, these elements are used to visually associate a specific portion of the transcription with the time interval in the audio file where that portion was spoken.

In particular, this step allows for the generation of not only the transcription itself but also a series of timestamps associated with text portions, enabling identification of the specific time in the audio file where a particular portion of text was spoken.

In this way, a person can easily find and listen to a particular part of the lesson quickly and efficiently. Given that a lesson typically lasts at least an hour, a timestamp associated with text portions allows the user to focus on the part they want to re-listen to without needing to go through the entire lesson to reach the point of interest.

Transcriptions generated by automatic transcribers often lack accuracy in sections with high technical content because, for example, it is difficult to transcribe a spoken formula. This is because these transcribers are usually tuned to general language models. To address this issue, step 140 reprocesses the previously generated transcription using a machine learning algorithm trained to recognize a string of text within a portion of the transcription that contains a mathematical formula, a chemical formula, or a musical figure.

This machine learning algorithm is trained through supervised learning, using annotations that allow each input - for example, in the case of recognizing a mathematical formula, a text string containing the formula expressed in natural language - to be associated with an output that enables the recognition of the string within the transcription text in a specific context. For instance, an algorithm trained to recognize mathematical formulas is trained on math lesson transcriptions, where a variety of topics from lessons in calculus, geometry, algebra, mathematical physics, probability, etc., are considered during training.

The selected lessons are transcribed by domain experts, where text portions containing specialized lexicon and/or concepts are appropriately annotated with references. These annotations are then used to train the classification model, with the goal of recognizing mathematical content within a transcription.

Similarly, the machine learning algorithm can be trained to recognize chemical formulas or musical figures contained in lesson transcriptions from their respective domains. Once the algorithm identifies the string, it will also provide a pair of references that delimit the start and end of that string within the transcription.

In the next step, 150, the formulas contained within the image file are identified and extracted. A boxing algorithm is trained to recognize and delimit a mathematical formula, chemical formula, or musical figure within the image file, isolating it from any surrounding text, such as the name of the theorem or the chemical compound being represented by the formula using graphic symbols, or from other formulas.

Once trained, the boxing algorithm is capable of searching for and extracting areas of the image file that contain a formula or musical figure expressed in symbolic language. Preferably, the extracted areas are saved in image or PDF format.

In the next phase, 160, the areas containing a formula or a musical figure expressed in symbolic language are input into a machine learning algorithm in the field of computer vision. This algorithm is designed to recognize manually generated mathematical or chemical formulas or musical figures. Specifically, once trained, the machine learning algorithm in phase 160 generates a code for the graphic symbols, preferably in LaTeX format, from the areas extracted in phase 150 that contain the manually generated symbols.

Examples of such algorithms in various application domains that can generate LaTeX code include Mathpix for mathematical formulas, Xymtex for chemical formulas, and Lilypond for musical figures. Preferably, this machine learning algorithm is further trained to provide a parameter that represents the accuracy of the generated code. As will be described later, this parameter allows a user to visually identify the accuracy of the code through the use of appropriate graphic symbols and/or colour coding.

The steps described so far represent the fundamental components that make it easier for a person to create an electronic document aimed at making all the content used during a lesson with technical content accessible. The final phase, 170, aims to gather the previous elements and organize them so that the user has all these foundational components at hand, enabling them to verify, modify, and/or integrate the content of a transcription, particularly in sections with significant technical value, such as formulas or musical figures.

Specifically, a user interface is provided, organized in a way that will be described in the following sections, that facilitates the editing process. This interface is arranged into several areas, each of which addresses a specific need the user may have during the document editing phase. The areas are divided as follows:

**Transcription Area**

In this part of the user interface, the transcription previously generated is displayed. This is based first on the work produced by the automatic transcriber and then by the result produced by the neural network trained to recognize specific portions of text containing mathematical formulas, chemical formulas, or musical figures. The particular graphic layout adopted allows the user to immediately recognize the essential components of this section, which include:

- The transcription text, divided into portions (preferably paragraphs), where each portion is accompanied by a timestamp that allows the user to identify the moment in the audio file when that particular portion was spoken during the lesson recording.
- Additionally, within each text portion, based on the pair of references determined by the second machine learning algorithm to identify the estimated position of the string containing a mathematical formula, chemical formula, or musical figure, the string is highlighted to differentiate it from the surrounding text, making it easy to locate.
- The highlighting of the string can be achieved using a different colour and/or font from the surrounding text, or it could appear as underlined and/or highlighted text.

**Playback Area**

In this part of the user interface, separate from the previous area, there is an audio player configured to play a portion of the audio file corresponding to a text portion displayed in the transcription area. In one implementation, the timestamps associated with a portion of the transcription text allow the user to manually set the playback to the time indicated by the timestamp. In another implementation, when the editor's pointer is positioned over the timestamp next to the corresponding text portion, this selection automatically activates the audio player and moves it to the time indicated by the timestamp, allowing the user to listen to what was recorded and then transcribed in that specific portion of text. The timestamp associated with each portion of the transcription helps the user resolve any doubts about the interpretation of the written transcription. By reading the transcription while listening, they can verify and compare the content of the text portion with what was actually said during the recording. In an alternative implementation, the audio player is activated only after clicking on the selected timestamp with the pointer.

In another possible implementation, the playback area 20 expands within the graphical interface to be positioned alongside the text portion being played, allowing the user to view images from a recorded video lesson, when available, from which the audio track was extracted. In yet another version, the playback area 20 can be an overlay window that partially covers other areas of the graphical interface when video lesson images are displayed. This allows the user to position it in a way that facilitates checking the transcription and/or formulas based on what is shown in the video.

**Image Display Area**

This section of the user interface, separate from the others, shows the mathematical formulas, chemical formulas, or musical figures that were manually generated during the recorded lesson and are included in the image file. In one implementation, this area can be collapsible so that, when visible, it allows the user to compare the highlighted string in the transcription, the coded formula or musical figure in the display area (as described below), and the formula or figure as it was written during the lesson. When this area is hidden, the interface is configured to offer a more comfortable view of the other sections, such as by enlarging the transcription viewing area 10 for easier reading.

**Display Area for Mathematical, Chemical, or Musical Formulas**

In this part of the user interface 30, different from the others, the mathematical formulas, chemical formulas, or musical figures that were encoded from the manually generated symbols during the recorded lesson are displayed. Each formula or musical figure is shown within a box 31 and, preferably, displayed in symbolic language 32, that is, in a condensed format using signs that carry rich meanings. This avoids the issues associated with expressing these formulas in natural language, which tends to be less intuitive and more ambiguous for the user.

Each box 31 not only displays the formula in symbolic form but also shows the code 33 of the mathematical, chemical formula, or musical figure, for example, in LaTeX format, within an editing area 34. This allows the user to modify and/or correct the formula based on the same mathematical, chemical formula, or musical figure shown in the image display area 40 and the version expressed in natural language shown in the transcription area 10.

In this way, the user can appropriately compare what was manually generated during a lesson with the mathematical or chemical formula, or musical figure shown in the box 31 within the formula or figure display area 30. Preferably, the box 31 for each formula displayed in the formula viewing area 30 also includes a preview function that allows the user to view the symbolic format 32 of the modified graphical symbols 33 within the editing area 32 of the box 31.

In another implementation, each formula box 31 in the formula display area 30 allows the user to visually determine the accuracy of the encoding performed by the fourth machine learning algorithm based on the image file portion containing a manually generated mathematical, chemical formula, or musical figure using graphical symbols. The quality of the encoding result can be displayed through graphic symbols 35 or colour coding of the box 31, enabling the user to quickly understand whether the formula or figure within the box was correctly encoded, is incomplete, or is incorrect.

In another implementation, the third area of the interface 30 highlights the manually generated mathematical or chemical formula, or musical figure, that is semantically closest to the highlighted text string 13 in the first area of the interface. By selecting the string with a pointer in the editor, the user can see the corresponding formula without needing to search through the image file manually. The formula or figure related to the highlighted string is already visible in the designated area of the interface.

Another implementation of the formula display area 30 includes a section that allows searching for specific terms within the transcription and replacing them with another term written manually or selected from a library. This library, depending on the transcription context, may include symbols, Greek letters, arrows, theorems, tables, musical notes, musical rests, accidentals, etc.

Thanks to the user interface's organization, a user can read the transcription, compare it with the recorded content of the lesson, and verify particular strings within the text portions using the image file and interactive area. This enables them to insert, correct, or augment the content with its respective representation in natural language, which is present in the transcription displayed in the image viewing area (40).

In a preferred implementation, the editor used in the user interface is implemented in LaTeX. This allows formulas or musical figures to be highlighted differently from the rest of the text and managed in LaTeX format within the transcription. This format enables access to various libraries available for different subjects, allowing the user to insert the formula or figure directly into the text. Examples of these libraries include Mathpix for mathematics, Xymtex for chemistry, and LilyPond for music.

To further assist the user in creating an electronic document, another implementation includes a preview area, which allows the user to view a preview of the formula or musical figure from the LaTeX string without the need to compile the entire document.

Figure 2 shows an example of the graphical interface according to the present invention, with the user interface editor implemented in LaTeX, where the different areas previously described are represented. Specifically, the transcription area 10 is shown in the upper left part of the figure, displaying the transcription text divided into text portions 11. Each text portion is accompanied by a timestamp 12 that, as described earlier, associates the text within a particular transcription segment with the exact moment in the recording when those words were spoken.

Another visible element in the figure is the text string 13 containing a mathematical, chemical formula, or musical figure, represented in a way that differs from the surrounding text to facilitate its identification.

Figure 2 also shows the playback area 20, which allows the user to listen to segments of the audio file based on the portion of text of interest, rather than playing the entire audio file.

At the bottom left of Figure 2, the image viewing area 40 is shown.

In particular, part of the image file is visible, which may include formulas 41 expressed in symbolic format and/or textual strings 42 as they were manually generated during a lesson. On the right side of Fig. 2, the formula viewing area 30 is shown, displaying the formulas or musical figures that were manually produced during the lesson.

The organization of the various areas of the interface allows the user to verify the correctness of the encoded formulas or figures. For example, the formula 41 shown in the image viewing area 40, which was generated during the lesson, can be compared with the same formula displayed in the first box 31 of the formula viewing area 30 to check if it has been correctly encoded. The user can then decide whether to integrate and/or modify it before copying it into the transcription area 10.

As described earlier, the task of verifying the accuracy of the encoding is facilitated by the presence of status icons 35 within the box 31 and/or the colour coding of the edges of the box 31 that contains the formula or musical figure.

Fig. 3 shows a detailed view of a box 31, in a preferred implementation, with the editing area 34 displayed. In this configuration, by modifying the formula's encoding within the editing area 34, the preview mode in the same box will show the formula in symbolic format 32 as it has been altered in its LaTeX encoding 33 within the editing area 34.

The preview can be automatic or triggered by a command, such as a button placed within the box 31. Once modified, the formula or musical figure can be inserted into the transcription area 10, for example, by performing a copy-paste operation from the box, or by using a specific button within the box configured to copy the formula or musical figure in addition to or replacing the highlighted string 13 within a text portion 11.

The editing and copy functionality described for a mathematical formula works similarly when a chemical formula or musical figure is shown in the box 31.

The positioning and sizing of the areas are illustrative only and could be represented with different placements or sizes.

Fig. 4 shows an alternative implementation compared to Fig. 2, where the formula viewing area 30 is paired with an editing area 50. Unlike the editing area 34 within a specific box 31, this editing area 50 is a free-form editing space not tied to a specific formula or musical figure. Its purpose is to assist the user in searching and modifying any part of the text in the transcription area 10.

Within the editing area 50, a first section 51 allows the user to search for specific words in the transcription area 10 and replace them with others if necessary. A second section 52 shows a variety of pre-loaded libraries, depending on the transcription context, from which mathematical formulas, chemical formulas, or musical figures can be selected and inserted into the transcription.

Specifically, the figure shows the area prepared for editing a math lesson, where section 52 provides symbols, Greek letters, formulas, theorems, etc., to assist the user in replacing text by offering ready-to-use strings. In a further preferred embodiment, as shown in Fig. 5, the formula viewing area 30 and the free-form editing area 50 are accompanied by a preview area 60, where the user can view the transcription once they believe the revision/preparation work is complete.

In this area 60, there is also an export function 62 that allows the transcription to be saved as a reference file, such as in PDF format, or sent to a printer to create a physical copy.

The previously described interface, which includes multiple areas each with a specific function, enables a user to create an electronic document, such as a transcription of a technically focused lesson - like one in mathematics, chemistry, etc. - in which mathematical formulas, chemical formulas, and musical figures are integrated depending on the context of the lesson. These elements help disambiguate incorrect interpretations that might arise from expressing them solely in natural language.

Moreover, the electronic document can subsequently be shared in electronic format or in other formats to assist individuals with disabilities or specific learning disorders.

For example, the electronic document could be sent to a mechanical and/or electronic Braille device. The document, printed by a mechanical device such as a Braille printer, would provide tactile feedback of the text, while an electronic device could offer auditory feedback by vocalizing the letters. These two solutions could also be used together, providing both tactile feedback and auditory feedback simultaneously.

## Claims

1. An aiding method (100) for the production of an electronic document, preferably a transcription comprising an encoding of graphic symbols created manually during a lesson having a technical content, comprising the steps of:

    - receiving (110) an audio file including at least one reference to a mathematical formula, a chemical formula or a musical figure with pentagram;
    - receiving (120) an image file including at least a textual part and/or at least one mathematical formula, a chemical formula or a musical figure hand-generated during the lesson;
    - generating (130), by means of a first automatic natural language processing algorithm applied to the audio file, a transcription comprising a plurality of timestamps (12) associated with portions of text (11) of said transcription so as to identify an interval of time in which said portion of text is spoken in the audio file;
    - processing (140) the transcription, using a second machine learning algorithm trained to recognize a text string (13) within a portion of text (11) which refers to a mathematical formula, a chemical formula or a music figure, so as to provide an estimated position of at least one text string (13) that refers to the mathematical formula, chemical formula or musical figure within the transcription, said estimated position being determined by means of a pair of references delimiting the beginning and end of said string (13);
    - extracting (150) at least a portion of the image file representing an area including a mathematical formula, a chemical formula or a musical figure via a third trained boxing algorithm;
    - generating (160) an encoding of graphic symbols of a mathematical formula, a chemical formula or a musical figure using a fourth machine learning algorithm, said algorithm being configured to receive at least one portion of the image file as input;
    - providing (170) via a user interface an editor on which:

- displaying the transcription in a first area of the interface (10) in such a way that one of the portions of text (11) including one of the text strings (13) is highlighted on the basis of the corresponding pair of references;
- displaying in a second area of the interface (20) different from the first an audio player configured to reproduce said audio file synchronized with the timestamps of the transcription;
- displaying in a third area of the interface (30), the said coding and/or graphic symbols of the said coding;
- displaying said image file in a fourth area of the interface (40), different from the first, second and third.

**2.** The method (100) according to claim 1, wherein the step of providing (170) further comprises the step of:

- highlighting within the third area of the interface (30) the mathematical formula, the chemical formula or the manually generated musical figure which is semantically closest to the text string (13) highlighted within the first area of the interface using selection via an editor pointer positioned over said string.

**3.** The method (100) according to claim 1, wherein the fourth machine learning algorithm of the generating step (160) is further trained to provide a parameter representative of the degree of accuracy with which said encoding was generated.

**4.** The method (100) according to the previous claims, wherein the step of providing (170) further includes the step of:

- delimiting the at least one mathematical formula, chemical formula or musical figure by means of an edge line in such a way as to define at least one box (31) which includes said formula or figure;

**5.** The method (100) according to claim 4, wherein the delimiting step includes the step of:

- visually representing at least one box (31) on the basis of the parameter representing the degree of accuracy in such a way as to distinguish at least the cases of coding without errors, incomplete coding, incorrect coding;

**6.** The method (100) according to claim 5, wherein the visually representing step is carried out by means of at least one of: coloring of the at least one box (31), insertion of graphic symbols, preferably status icons, inside the at least a box (31);

**7.** The method (100) according to the preceding claims, wherein the step of providing (170) further comprises the step of selecting a mathematical, chemical formula or a musical figure from a preloaded library so as to use said formula or selected figure in addition or replacement of the text string (13) belonging to a portion of text (11) in such a way as to facilitate the user by reducing writing times and errors.

**8.** The method (100) according to the previous claims, wherein the step of displaying the second area of the interface (20) further comprises a video player configured to play a video lesson associated with the audio file when said audio file is generated from the audio track of said video lesson.

**9.** The method (100) according to claim 8, wherein the second area of the interface (20) is a window that can be at least partially superimposed on at least one of the other areas.

**10.** The method (100) according to one of the previous claims, wherein said method further comprises the step of:

- sending (180) the transcription to a mechanical and/or electronic Braille device to generate a document that can be used by a person with visual difficulties through tactile and/or sound feedback.

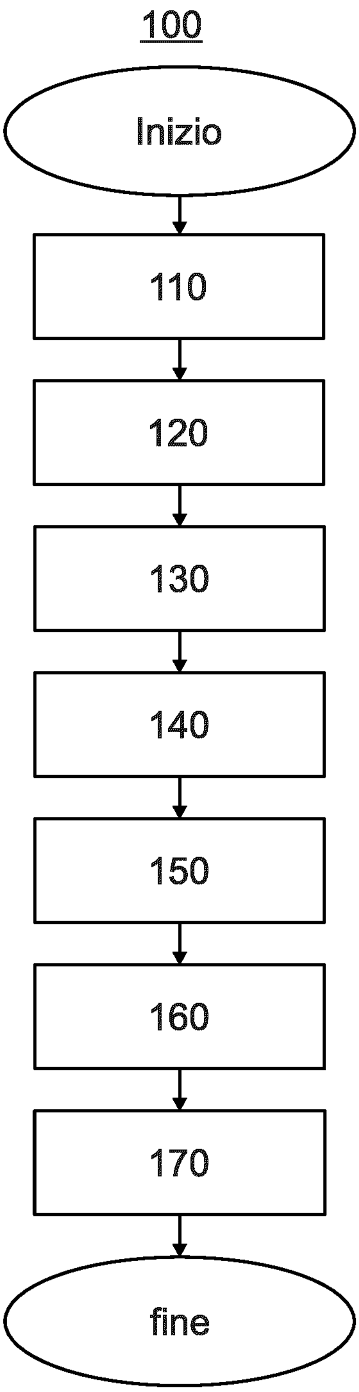


Fig. 1

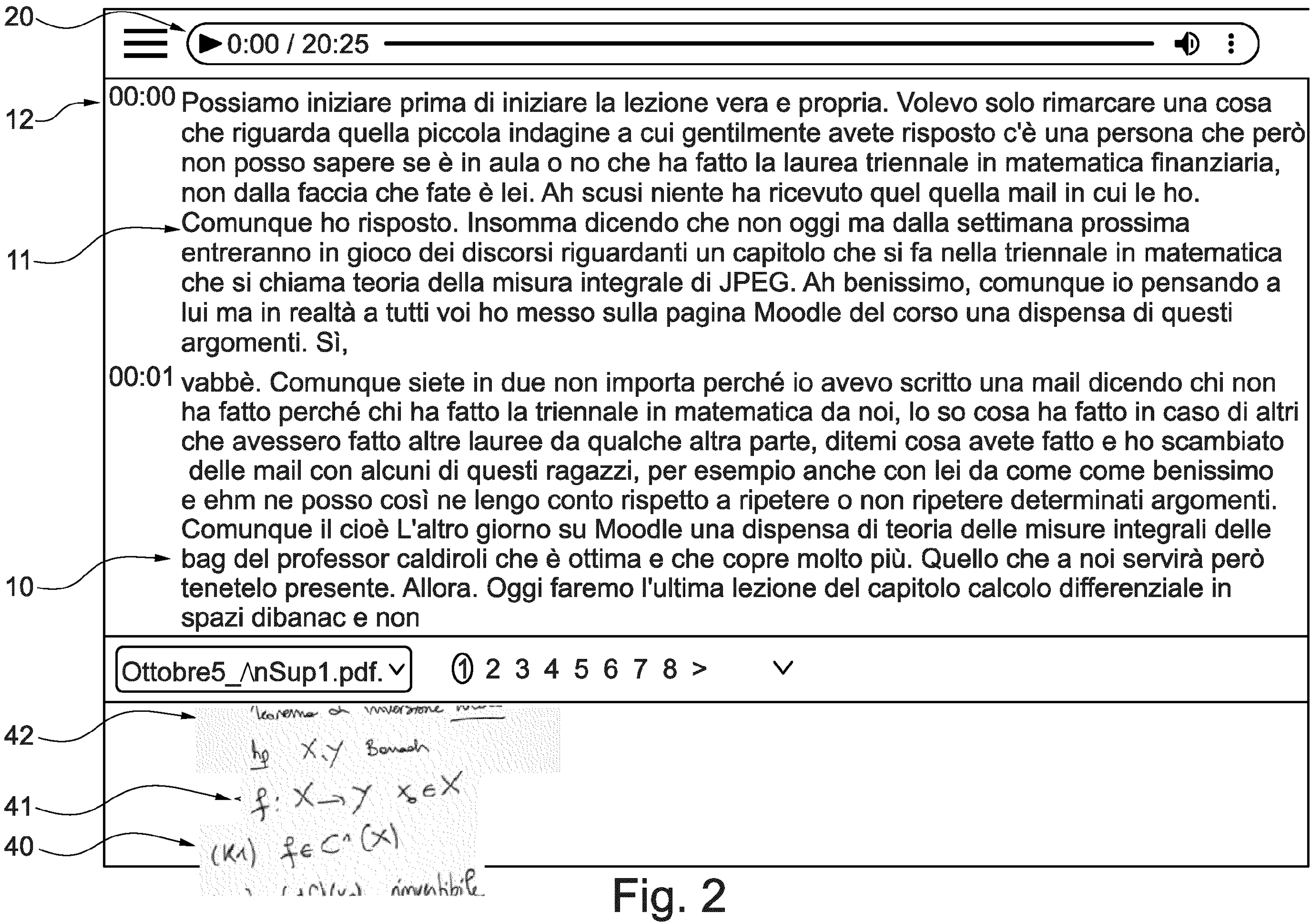
20
12
11
10
42
41
40
0:00 / 20:25
00:00
Possiamo iniziare prima di iniziare la lezione vera e propria. Volevo solo rimarcare una cosa che riguarda quella piccola indagine a cui gentilmente avete risposto c'è una persona che però non posso sapere se è in aula o no che ha fatto la laurea triennale in matematica finanziaria, non dalla faccia che fate è lei. Ah scusi niente ha ricevuto quel quella mail in cui le ho. Comunque ho risposto. Insomma dicendo che non oggi ma dalla settimana prossima entreranno in gioco dei discorsi riguardanti un capitolo che si fa nella triennale in matematica che si chiama teoria della misura integrale di JPEG. Ah benissimo, comunque io pensando a lui ma in realtà a tutti voi ho messo sulla pagina Moodle del corso una dispensa di questi argomenti. Sì,
00:01
vabbè. Comunque siete in due non importa perché io avevo scritto una mail dicendo chi non ha fatto perché chi ha fatto la triennale in matematica da noi, lo so cosa ha fatto in caso di altri che avessero fatto altre lauree da qualche altra parte, ditemi cosa avete fatto e ho scambiato delle mail con alcuni di questi ragazzi, per esempio anche con lei da come come benissimo e ehm ne posso così ne lengo conto rispetto a ripetere o non ripetere determinati argomenti. Comunque il cioè L'altro giorno su Moodle una dispensa di teoria delle misure integrali delle bag del professor caldiroli che è ottima e che copre molto più. Quello che a noi servirà però tenetelo presente. Allora. Oggi faremo l'ultima lezione del capitolo calcolo differenziale in spazi dibanac e non
Ottobre5_/\nSup1.pdf.
1 2 3 4 5 6 7 8 >

Fig. 2

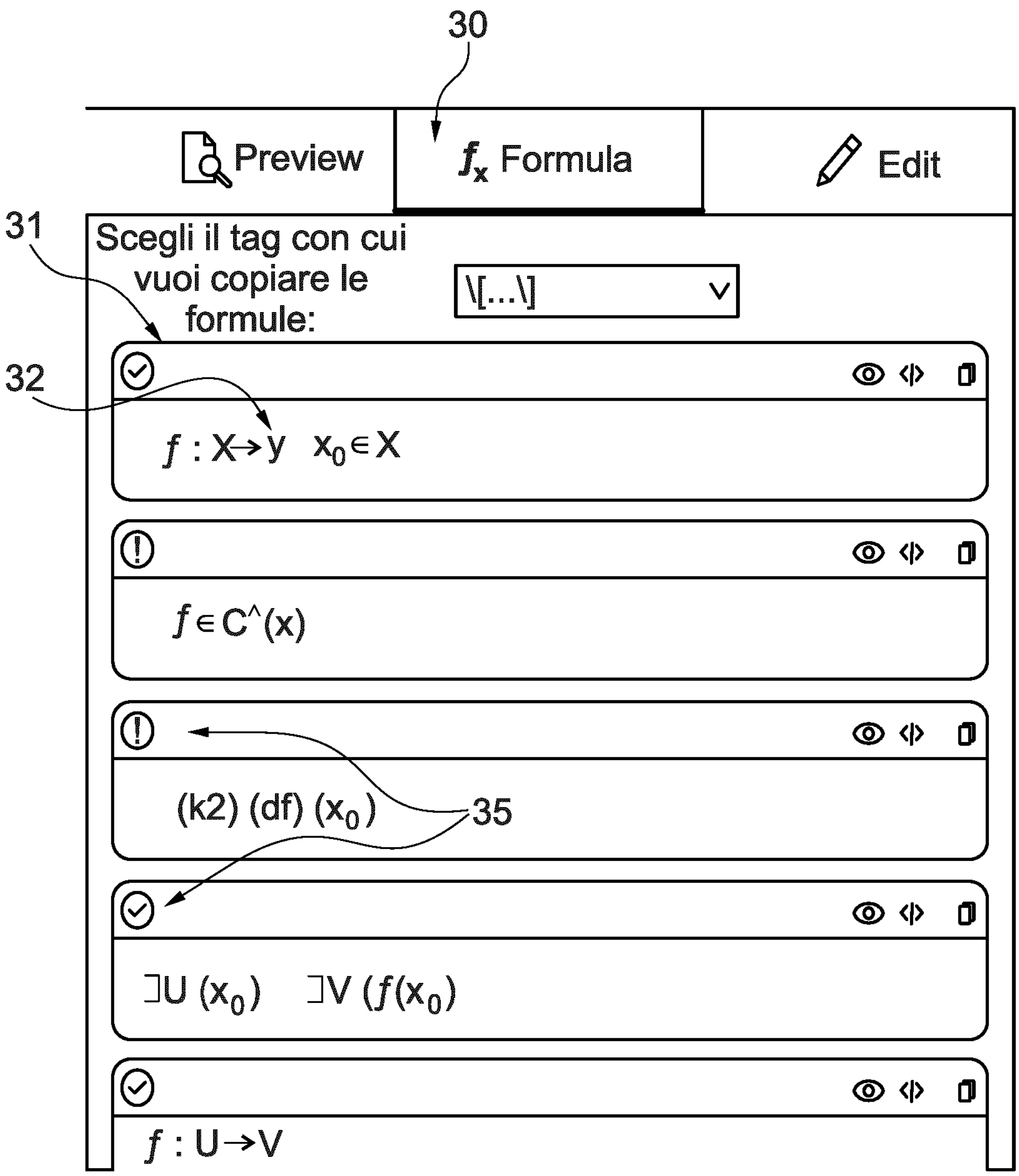


Fig. 2 (continued)

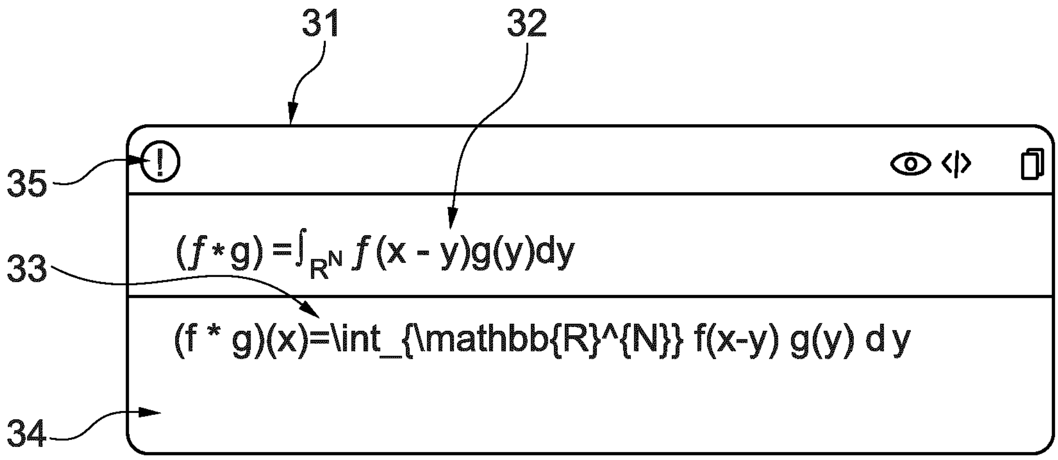


Fig. 3

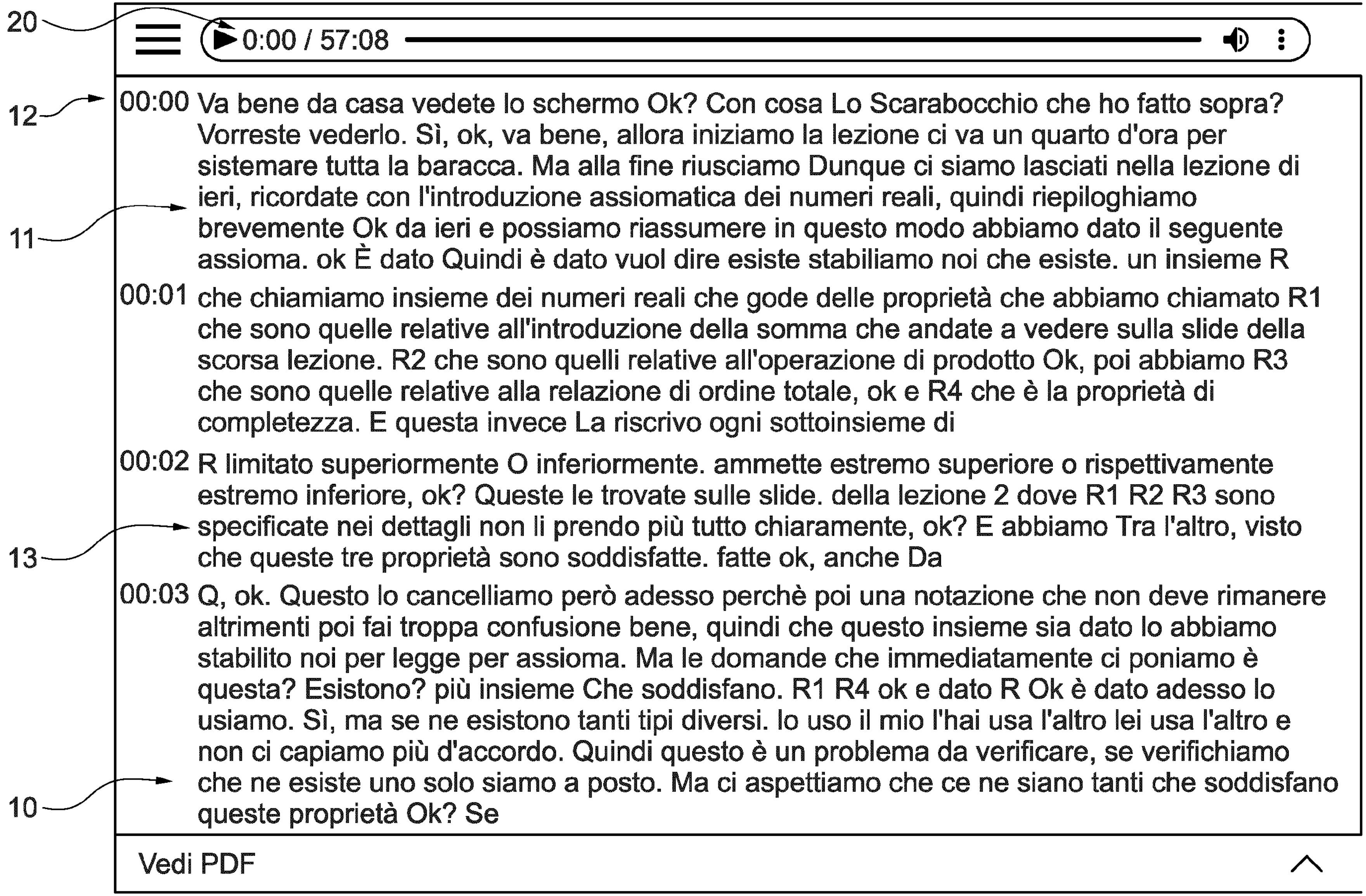
20
12
11
13
10
0:00 / 57:08
00:00 Va bene da casa vedete lo schermo Ok? Con cosa Lo Scarabocchio che ho fatto sopra? Vorreste vederlo. Sì, ok, va bene, allora iniziamo la lezione ci va un quarto d'ora per sistemare tutta la baracca. Ma alla fine riusciamo Dunque ci siamo lasciati nella lezione di ieri, ricordate con l'introduzione assiomatica dei numeri reali, quindi riepiloghiamo brevemente Ok da ieri e possiamo riassumere in questo modo abbiamo dato il seguente assioma. ok È dato Quindi è dato vuol dire esiste stabiliamo noi che esiste. un insieme R
00:01 che chiamiamo insieme dei numeri reali che gode delle proprietà che abbiamo chiamato R1 che sono quelle relative all'introduzione della somma che andate a vedere sulla slide della scorsa lezione. R2 che sono quelli relative all'operazione di prodotto Ok, poi abbiamo R3 che sono quelle relative alla relazione di ordine totale, ok e R4 che è la proprietà di completezza. E questa invece La riscrivo ogni sottoinsieme di
00:02 R limitato superiormente O inferiormente. ammette estremo superiore o rispettivamente estremo inferiore, ok? Queste le trovate sulle slide. della lezione 2 dove R1 R2 R3 sono specificate nei dettagli non li prendo più tutto chiaramente, ok? E abbiamo Tra l'altro, visto che queste tre proprietà sono soddisfatte. fatte ok, anche Da
00:03 Q, ok. Questo lo cancelliamo però adesso perchè poi una notazione che non deve rimanere altrimenti poi fai troppa confusione bene, quindi che questo insieme sia dato lo abbiamo stabilito noi per legge per assioma. Ma le domande che immediatamente ci poniamo è questa? Esistono? più insieme Che soddisfano. R1 R4 ok e dato R Ok è dato adesso lo usiamo. Sì, ma se ne esistono tanti tipi diversi. Io uso il mio l'hai usa l'altro lei usa l'altro e non ci capiamo più d'accordo. Quindi questo è un problema da verificare, se verifichiamo che ne esiste uno solo siamo a posto. Ma ci aspettiamo che ce ne siano tanti che soddisfano queste proprietà Ok? Se
Vedi PDF

Fig. 4

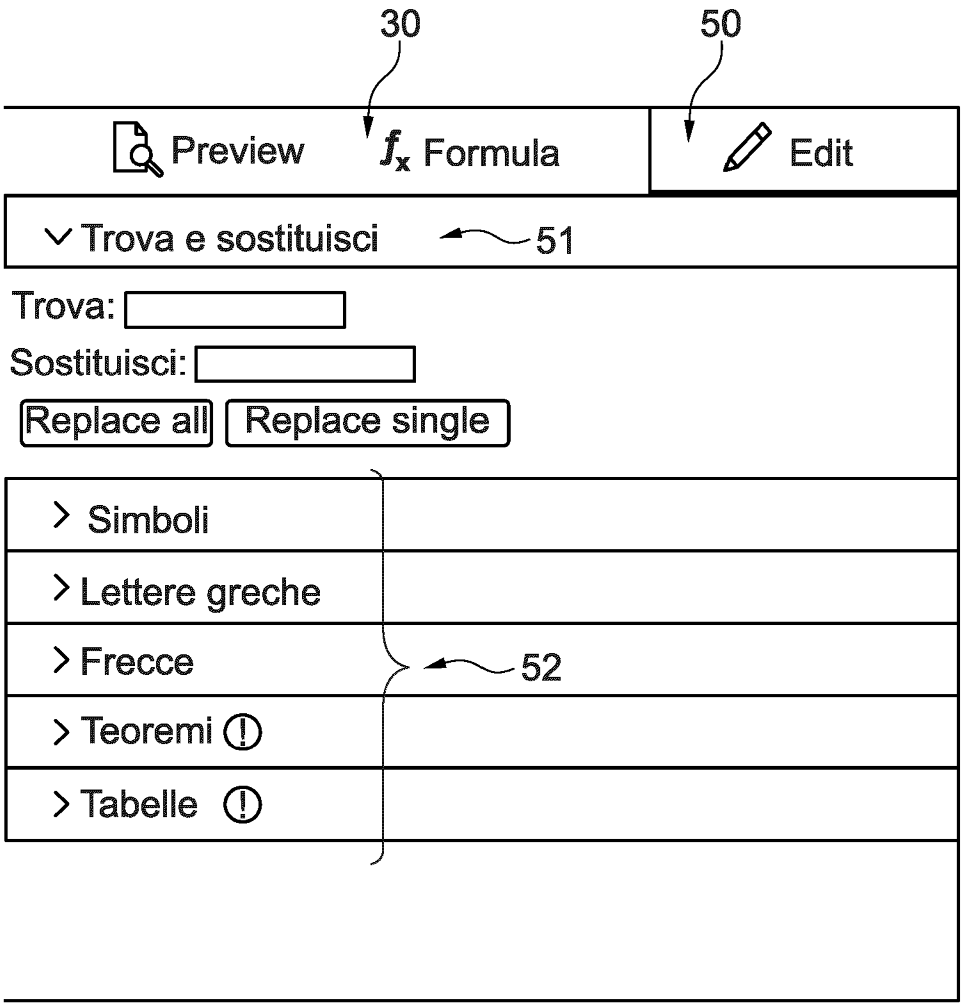


Fig. 4 (continued)

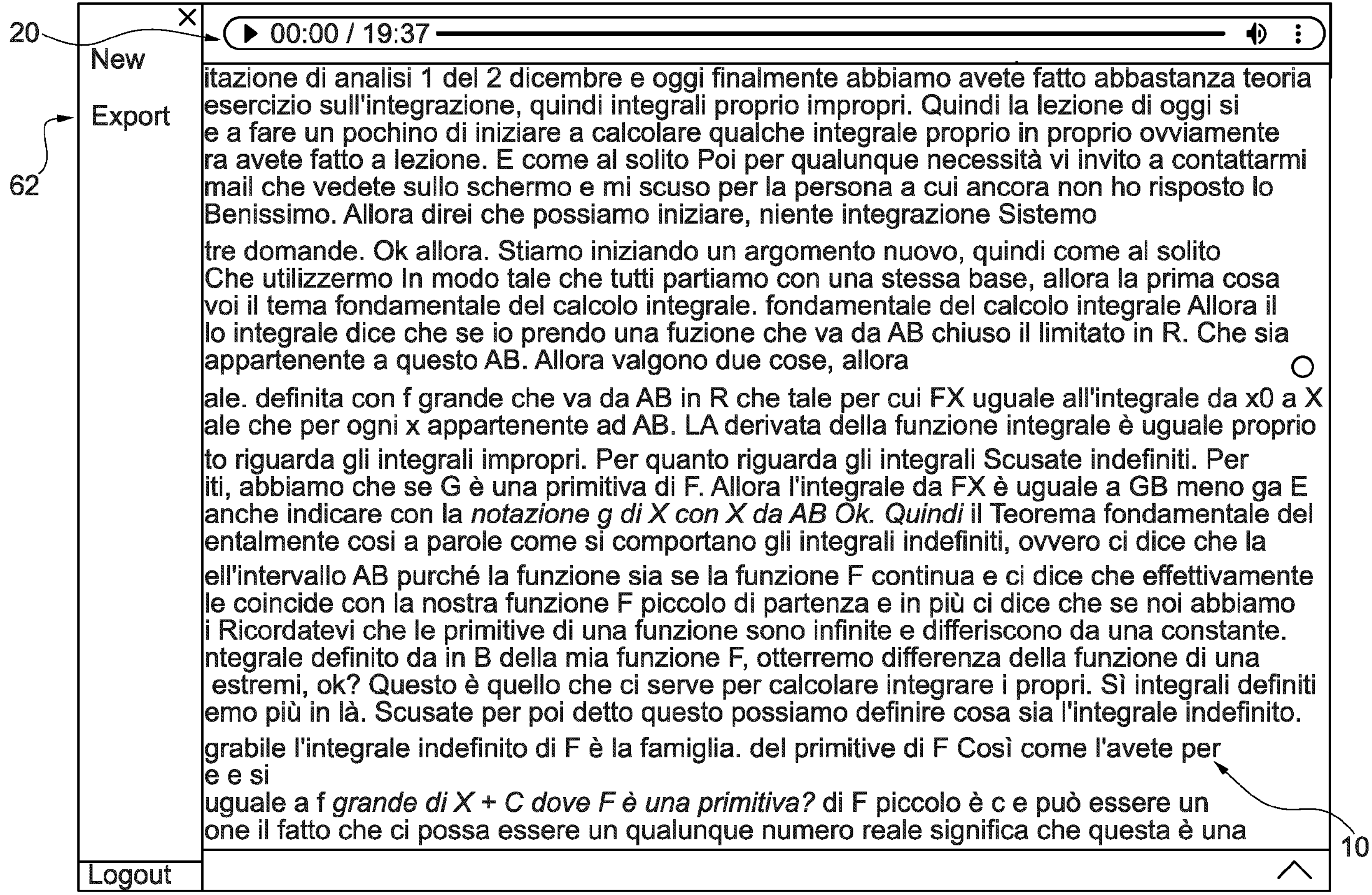
20
62
10
New
Export
Logout
00:00 / 19:37
itazione di analisi 1 del 2 dicembre e oggi finalmente abbiamo avete fatto abbastanza teoria
esercizio sull'integrazione, quindi integrali proprio impropri. Quindi la lezione di oggi si
e a fare un pochino di iniziare a calcolare qualche integrale proprio in proprio ovviamente
ra avete fatto a lezione. E come al solito Poi per qualunque necessità vi invito a contattarmi
mail che vedete sullo schermo e mi scuso per la persona a cui ancora non ho risposto lo
Benissimo. Allora direi che possiamo iniziare, niente integrazione Sistemo
tre domande. Ok allora. Stiamo iniziando un argomento nuovo, quindi come al solito
Che utilizzermo In modo tale che tutti partiamo con una stessa base, allora la prima cosa
voi il tema fondamentale del calcolo integrale. fondamentale del calcolo integrale Allora il
lo integrale dice che se io prendo una fuzione che va da AB chiuso il limitato in R. Che sia
appartenente a questo AB. Allora valgono due cose, allora
ale. definita con f grande che va da AB in R che tale per cui FX uguale all'integrale da x0 a X
ale che per ogni x appartenente ad AB. LA derivata della funzione integrale è uguale proprio
to riguarda gli integrali impropri. Per quanto riguarda gli integrali Scusate indefiniti. Per
iti, abbiamo che se G è una primitiva di F. Allora l'integrale da FX è uguale a GB meno ga E
anche indicare con la *notazione g di X con X da AB Ok. Quindi* il Teorema fondamentale del
entalmente cosi a parole come si comportano gli integrali indefiniti, ovvero ci dice che la
ell'intervallo AB purché la funzione sia se la funzione F continua e ci dice che effettivamente
le coincide con la nostra funzione F piccolo di partenza e in più ci dice che se noi abbiamo
i Ricordatevi che le primitive di una funzione sono infinite e differiscono da una constante.
ntegrale definito da in B della mia funzione F, otterremo differenza della funzione di una
estremi, ok? Questo è quello che ci serve per calcolare integrare i propri. Sì integrali definiti
emo più in là. Scusate per poi detto questo possiamo definire cosa sia l'integrale indefinito.
grabile l'integrale indefinito di F è la famiglia. del primitive di F Così come l'avete per
e e si
uguale a f *grande di X + C dove F è una primitiva?* di F piccolo è c e può essere un
one il fatto che ci possa essere un qualunque numero reale significa che questa è una

Fig. 5

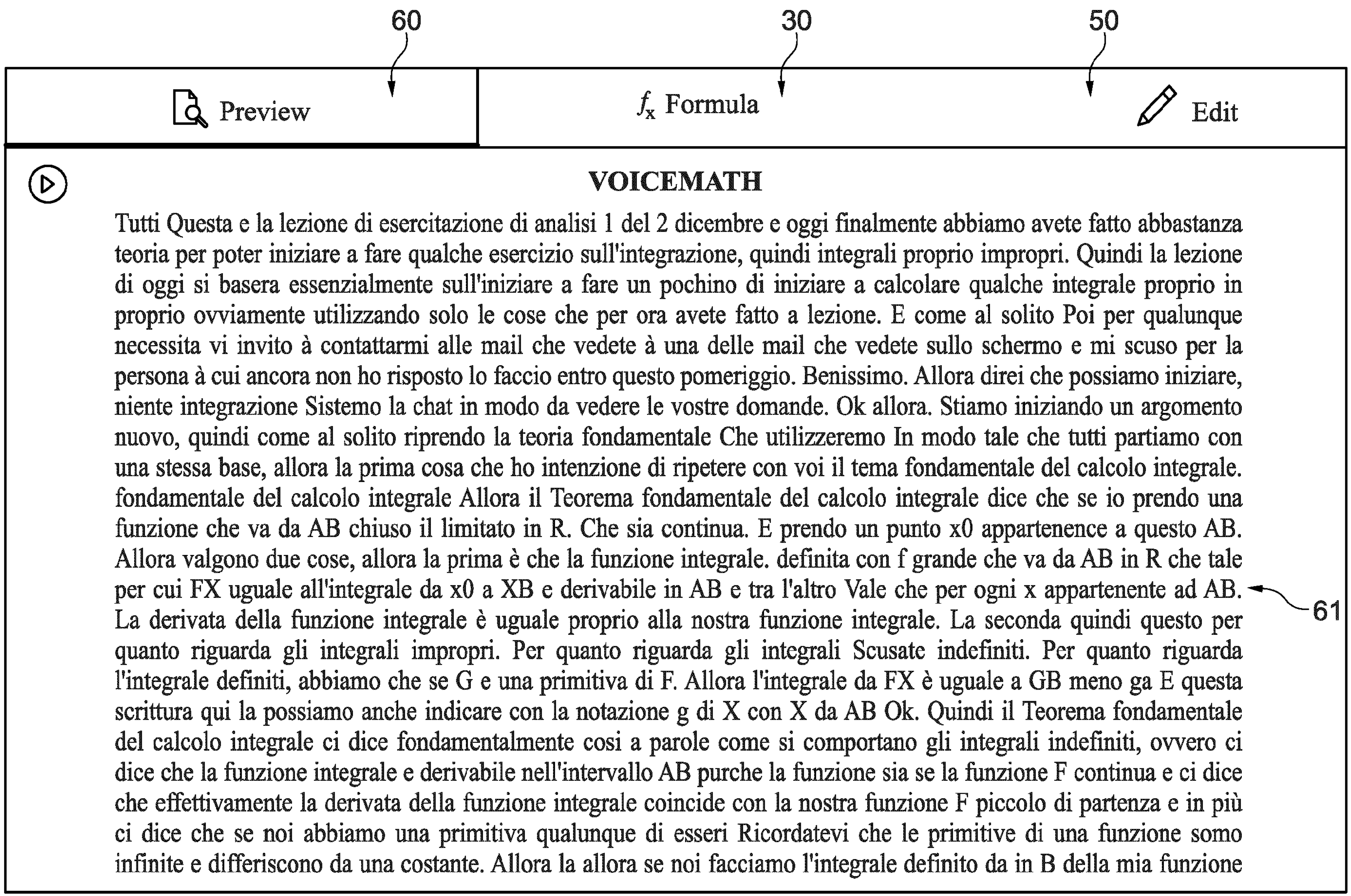


Fig. 5 (continued)

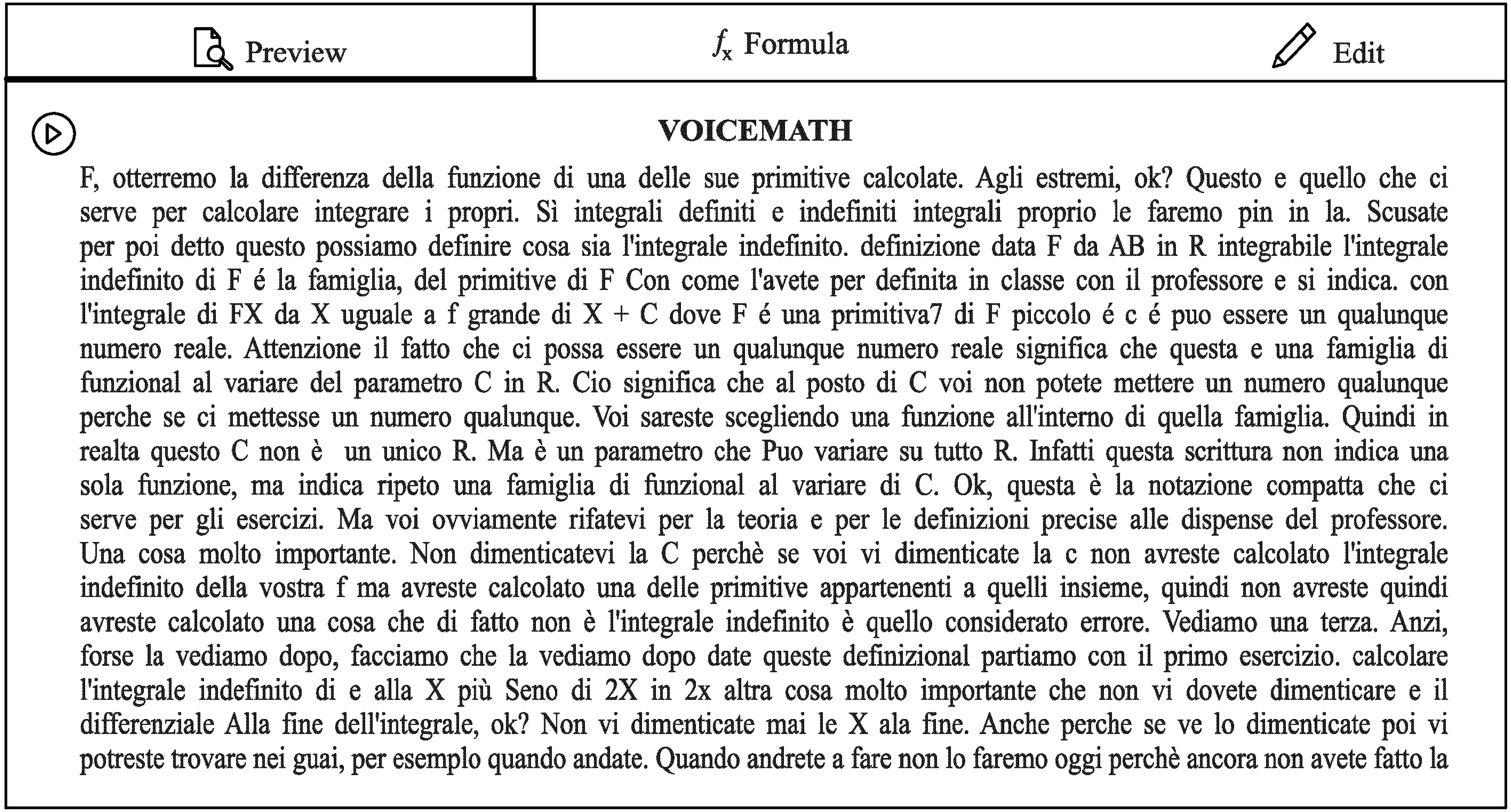


Fig. 5 (continued)

Europäisches Patentamt
European Patent Office
Office européen des brevets

# EUROPEAN SEARCH REPORT

Application Number
EP 25 15 3625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/076105 A1 (PARMAR MONAL MAHESH [US] ET AL) 11 March 2021 (2021-03-11) | 1-4,7-10 | INV. G10L15/26 |
| A | * paragraph [0599] - paragraph [0612] * * figures 8A,8B,8C * | 5,6 | |
| Y | US 2021/056251 A1 (PARMAR MONAL MAHESH [US] ET AL) 25 February 2021 (2021-02-25) | 1-4,7-10 | |
| A | * paragraph [0500] - paragraph [0508] * * figures 8A,8B,8C * | 5,6 | |
| Y | MEDJKOUNE SOFIANE ET AL: "Combining Speech and Handwriting Modalities for Mathematical Expression Recognition", IEEE TRANSACTIONS ON HUMAN-MACHINE SYSTEMS, IEEE, PISCATAWAY, NJ, USA, vol. 47, no. 2, 1 April 2017 (2017-04-01), pages 259-272, XP011642798, ISSN: 2168-2291, DOI: 10.1109/THMS.2017.2647850 [retrieved on 2017-03-13] | 1-4,7-10 | |
| A | * the whole document * | 5,6 | |

| TECHNICAL FIELDS SEARCHED (IPC) |
|---|
| G10L |
| G06F |
| G06V |

The present search report has been drawn up for all claims

1

| Place of search | Date of completion of the search | Examiner |
|---|---|---|
| The Hague | 8 April 2025 | De Ceulaer, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 3625

This annex lists the patent family members relating to the patent documents cited in the above-mentioned European search report. The members are as contained in the European Patent Office EDP file on
The European Patent Office is in no way liable for these particulars which are merely given for the purpose of information.

08-04-2025

| Patent document cited in search report | Publication date | Patent family member(s) | Publication date |
|---|---|---|---|
| US 2021076105 A1 | 11-03-2021 | US 2021076105 A1 | 11-03-2021 |
| | | WO 2021051024 A1 | 18-03-2021 |
| US 2021056251 A1 | 25-02-2021 | US 2021056251 A1 | 25-02-2021 |
| | | WO 2021035223 A1 | 25-02-2021 |

EPO FORM P0459

For more details about this annex : see Official Journal of the European Patent Office, No. 12/82